# EUROPÄISCHE PATENTSCHRIFT

(11) **EP 1 656 724 B1**
(45) Veröffentlichungstag und Bekanntmachung des Hinweises auf die Patenterteilung: **20.04.2011**
(21) Anmeldenummer: 04766502.1
(22) Anmeldetag: 16.08.2004
(51) Int. Cl.: H02K 1/14, H02K 19/10, H02K 5/24, H02K 5/15, H02K 1/18

(54) **RELUKTANZMOTOR**
RELUCTANCE MOTOR
MOTEUR A RELUCTANCE

(30) Priorität: 18.08.2003 DE 10337915
(43) Veröffentlichungstag der Anmeldung: 17.05.2006
(60) Teilanmeldung: 08160195.7
(73) Patentinhaber: Vorwerk & Co. Interholding GmbH, 42275 Wuppertal (DE)
(72) Erfinder: CALDEWEY, Uwe, 44229 Dortmund (DE); LIENENLÜCKE, Paul, 45549 Sprockhövel (DE); THEUERMANN, Volker, 58455 Witten (DE)
(74) Vertreter: Müller, Enno
(86) Internationale Anmeldenummer: PCT/EP2004/051800
(87) Internationale Veröffentlichungsnummer: WO 2005/020410

(56) Entgegenhaltungen:
- EP-A- 0 240 644
- EP-A- 1 130 739
- DE-A1- 10 014 307
- GB-A- 737 825
- GB-A- 740 839
- GB-A- 2 303 745

## Beschreibung

Die Erfindung betrifft einen Reluktanzmotor nach den Merkmalen des Oberbegriffes des Anspruches 1.

Reluktanzmotoren der in Rede stehenden Art sind bekannt. Die hierbei eingesetzten Statoren sind entweder als Massivbauteil oder in Form eines Statorblech-Pakets ausgebildet, wobei letzterer Variante die einzelnen Statorbleche als Blechstanzteile ausgebildet sind.

Aus der GB 2303745 A ist es bekannt, Pakete von Stanzblechen abschnittsweise so versetzt übereinander anzuordnen, dass sich vorstehende und zurückweichende Eckbereiche ergeben. Hiermit ist allerdings eine relativ große Störung des außenseitigen Umfangs des Stators verbunden. Zudem könnte die Kühlwirkung verbessert sein.

Aus der GB 2314692 A ist es bekannt, die Statorbleche nur an den Längsrandkanten des insgesamt im Grundriss rechteckigen Statorblechs mit unterschiedlicher Dicke (Breite) auszubilden. Die Breite (Übergröße) im Vergleich zu den Wickelkernen ist vergleichsweise sehr groß. Ohne dass ein wesentlich größerer Umfang erreicht wird ist relativ viel zusätzliches Material erforderlich. Dagegen formen beim Gegenstand der erstgenannten Druckschrift alle in Umfangsrichtung aufeinanderfolgenden Eckbereiche beim fertigen Stator einen Verdickungsansatz aus. Die Flanken eines Verdickungsansatzes sind im stumpfen Winkel zueinander angeordnet.

Ausgehend von dem genannten Stand der Technik stellt sich der Erfindung die Aufgabe, einen sowohl stabilitätsmäßig wie auch wärmetechnisch günstigen Statoraufbau anzugeben.

Diese Aufgabe ist beim Gegenstand des Anspruches 1 gelöst, wobei darauf abgestellt ist, dass umfangsmäßig abwechselnd das Statorblech eine ausgefüllte Ecke zur Bildung eines gegenüberliegend zu einem Wickelkern angeordrieten, in radialer Richtung parallel zueinander verlaufende Flanken aufweisenden Verdickungsansatzes aufweist und an der in Umfangsrichtung folgenden, beim fertigen Stator gleichfalls einen Verdickungsansatz ausformenden Ecke einen Fehlbereich aufweist, wobei darüber hinaus die zwischen den Flanken des Verdickungsansatzes gegebene Breite etwa dem 1,2 bis 1,7-Fachen der Breite des zugeordneten Wickelkerns entspricht. Es ist eine effektive Ausnutzung des Blechs, aus welchem die Statorbleche ausgestanzt werden, erreicht. Da für den Betrieb des Reluktanzmotors zunächst im Wesentlichen die Innenkontur, das heißt die dem mit dem Stator zusammenwirkenden Rotor zugewandte Kontur auch im Bereich des die Grundfläche des Statorkerns nicht vollständig abdeckenden Statorblechs erhalten bleibt, wirkt sich diese erfindungsgemäße Maßnahme nicht auf die Funktionstüchtigkeit des Reluktanzmotors aus. Vielmehr sind die insofern gebildeten Fehlbereiche dem in erster Linie der Halterung des Stators in einer Motoraufnahme dienenden Außenrand zugeordnet. Da es sich bei dem Stator um ein ortsfestes, das heißt nicht rotierendes Bauteil handelt, wirken sich die gebildeten Fehlbereiche auch nicht hinsichtlich einer Unwucht oder dergleichen aus. Des Weiteren kann durch die erfindungsgemäße Ausgestaltung des Statorblechs dieses, bei Anordnung dieses Statorblechs als oberstes bzw. unterstes Blech des Statorblech-Pakets, an die Außenkontur einer deckelartig die Flachseiten des Stators überdeckenden Brücke angepasst sein. Des Weiteren können auch mehrere Statorbleche des Statorblech-Pakets so ausgebildet sein, dass diese jeweils weniger als die Grundfläche des durch die übereinander angeordneten Statorbleche gebildeten Statorkerns abdecken, wobei auch hier die insofern gebildeten Fehlbereiche der Statorbleche dem Statorkern-Außenrand zugeordnet sind. Der aus den Statorblechen gebildete Statorkern ist im Bereich der dem Rotor zugewandten Wickelkerne in Radialrichtung im Vergleich zu zwischen den Wickelkernen sich erstreckenden Statorkembrücken verbreitert ausgebildet,_was sich insbesondere hinsichtlich der Aussteifung des so gebildeten Stators als Vorteil erweist.

Im Betrieb des Reluktanzmotors treten bei unmittelbarer Gegenüberlage eines Wickelkerns zu einem Rotorsegment des umlaufenden Rotors sehr hohe, nach radial innen gerichtete Kräfte auf. Der Statorkern ist hierzu im Bereich der Wickelkerne in Radialrichtung im Vergleich zu zwischen den Wickelkernen sich erstreckenden Statorkernbrücken verbreitert ausgebildet. Es ergibt sich eine höhere Steifigkeit des Stators insbesondere im Bereich der Wickelkerne, so dass die bei unmittelbarer Gegenüberlage von Wickelkern und Rotorsegment des umlaufenden Rotors auftretenden sehr hohen, nach radial innen gerichteten Kräfte aufgenommen werden können. Neben der höheren Steifigkeit ergibt sich auch eine größere äußere Manteloberfläche des Stators, was zu einem günstigeren Kühleffekt führt. Die gebildeten Fehlbereiche des Statorblechs oder auch mehrerer Statorbleche des Statorblech-Pakets sind fern der Radialverbreiterungen des Stators, bevorzugt im Bereich der Statorkembrücken angeordnet.

Die Statorkernbrücken weisen umfangsmäßig in der Mitte zwischen zwei Wickelkernen eine geringste radial Dicke auf. So entspricht die radiale Dicke des Stators im Bereich einer Verbreiterung etwa dem 1,2 bis 1,7-Fachen, bevorzugt etwa 1,5-Fachen der radialen Dicke im Bereich einer Statorbrücke. Der in Radialrichtung verbreiterte Bereich des Statorkerns ist bevorzugt gebildet durch einen gegenüberliegend zu einem Wickelkern nach radial außen vorstehenden Verdickungsansatz. Es versteht sich, dass dieser Verdickungsansatz materialeinheitlich Teil des Statorkerns bzw. der diesen Statorkern bildenden, übereinander angeordneten Statorbleche ist. Bevorzugt weist der Verdickungsansatz in radialer Richtung parallele Flanken auf, wobei ein Abstand dieser parallelen Flanken zueinander bevorzugt größer gewählt ist als die in selber Richtung gemessene Breite des zugeordneten, radial innen vorstehenden Wickelkerns. So entspricht die zwischen den parallelen Flanken gemessene Breite des Verdickungsansatzes bevorzugt etwa dem 1,5-Fachen der Breite des zugeordneten Wickelkerns. Der Verdickungsansatz kann als ein im Grundriss etwa rechteckförmiger Radialvorsprung ausgebildet sein. Bevorzugt wird diesbezüglich eine Ausgestaltung, bei welcher der Verdickungsansatz an seiner freien Stirnkante konkav geformt ist, dies beispielsweise mit einem Radius von 5 -15 mm, bevorzugt 9 mm. Bevorzugt sind in Höhenrichtung des Statorkerns jeweils an einer Ecke die Statorbleche abwechselnd die Ecke ausbildend oder einen Fehlbereich zuordnend angeordnet. Dies ist bevorzugt dadurch erreicht, dass die untereinander gleichen Statorbleche von Lage zu Lage in Umfangsrichtung um eine Ecke versetzt sind. Zufolge dieser erfindungsgemäßen Ausgestaltung ist ein Stator durch Übereinanderanordnung einzelner Statorbleche erreichbar, welcher im Bereich der Wickelkerne in Radialrichtung verbreitert ausgebildet ist. Um insofern nicht aus einem Blech mit größerer Breite ausstanzen zu müssen - was zu entsprechend mehr Verschnitt auch führen würde -, ist bevorzugt jeweils an zwei gegenüberliegenden, parallelen Seiten die entsprechende Verbreiterung der Statorgrundrissfläche - Fehlbereich - nicht vorgesehen. Die Statorbleche werden jedoch lagenmäßig zyklisch vertauscht, so dass auch in den schmaleren Bereichen - Statorkembrücken - letztlich die gleiche Steifigkeit erreicht wird. Neben der höheren Steifigkeit ergibt sich auch eine größere, äußere Oberfläche, die zu einem günstigeren Kühleffekt führt. Darüber hinaus wird so vorteilhaft auch ein Unterschied in der Walzdicke der Bleche ausgeglichen. Zudem ist ein Vorteil hinsichtlich Gewichtsersparnis gegeben. Durch den lagenmäßig zyklischen Tausch der Statorbleche und somit der Zuordnung eines Fehlbereiches eines Statorblechs zwischen zwei die Ecke ausbildenden Bereichen zweier über- und unterhalb des den Fehlbereich aufweisenden Statorblechs angeordneten Statorbleche eine frei auskragende Blechzungenkontur des Verdickungsansatzes, welcher zufolge dieser Anordnung durch jedes zweite Statorblech ausgeformt ist. Auch dies erweist sich insbesondere hinsichtlich der Kühlung als weiter vorteilhaft. Bevorzugt ist der Grundriss eines jeden Statorblechs so gewählt, dass auch im Bereich der Statorkembrücken zumindest partiell diese blechlappenartige Ausgestaltung des Stator-Pakets erreicht ist. Eine weitere Verbesserung der Stabilität ist dadurch erreicht, dass ein Statorblech mit Backlack beschichtet ist. Das entsprechend ausgebildete Backlackblech weist zusätzlich zu einer beidseitigen Isolierschicht noch eine Backlackschicht auf, welche bei Temperaturerhöhung (backen) in einen Klebezustand übergeht. Entsprechend kann auch vorgesehen sein, dass die Statorbleche untereinander verklebt sind. In vorteilhafter Weise stellt sich auch eine günstige Beeinflussung der Resonanzcharakteristik hierdurch ein (der "Peak" wird verkleinert). Des Weiteren sind die Statorbleche durch Verschraubung zusammengehalten. So können die Statorbleche insbesondere bei einer nicht durchgeführten Verklebung derselben untereinander kraftschlüssig mittels der Verschraubung verbunden sein. Die Befestigung erfolgt bevorzugt mittels vier umfangsmäßig gleichmäßig verteilten Schrauben, wobei jedoch durch die bevorzugte gleiche Ausgestaltung der Statorbleche und der weiter bevorzugten zyklischen Vertauschung aufeinanderfolgender Statorbleche in Umfangsrichtung acht über den Umfang gleichmäßig verteilte Bohrungen zur Aufnahme der Schrauben vorgesehen sind. Eine weitere Maßnahme zur Erhöhung der Stabilität und zum Erreichen der Formteilgenauigkeit ist dadurch erreicht, dass die Statorbleche stanzpaketiert sind. Hierbei wird in den Statorblechen an einer bevorzugten Stelle jeweils eine Einsenkung vorgenommen, so dass die hierdurch auf der gegenüberliegenden Seite geschaffene Wulst in der Einsenkung des darunter befindlichen Statorblechs einliegt. Zufolge dieser Ausgestaltung ist neben einer erreichten Verdrehsicherung der Statorbleche untereinander zugleich auch eine klare Zuordnung der Statorbleche zueinander im Zuge der Herstellung des Statorblech-Pakets erreicht. In einer weiteren Ausgestaltung des Erfindungsgegenstandes ist vorgesehen, dass der nach radial außen vorstehende Verdickungsansatz Träger eines Dämpfungselements ist. Mittels dieses Dämpfungselements ist der Stator weiter bevorzugt in einer Motoraufnahme gelagert, so dass sich aufgrund der erfindungsgemäßen Außenkontur des Stators in Zusammenwirkung mit den Dämpfungselementen und der Motoraufnahme eine Verdrehsicherung gebildet ist. Die Dämpfungselemente bestehen bevorzugt aus einem Weichkunststoff, etwa TPE. Zufolge dessen ist eine erhöhte Dämpfung von Schwingungsgeräuschen erreicht. Darüber hinaus erbringen diese Dämpfungselemente auch einen Fallschutz beim Transport oder dergleichen. In einer bevorzugten Ausgestaltung des Erfindungsgegenstandes ist vorgesehen, dass ein Dämpfungselement schuhartig ausgebildet ist und demzufolge bevorzugt von einer Breitseite des Stators aus über den Verdickungsansatz anschlagbegrenzt geschoben wird. Jedem Verdickungsansatz, wobei die Anzahl der Verdickungsansätze der Anzahl der Wickelkerne entspricht, kann ein solches Dämpfungselement zugeordnet sein. Denkbar ist jedoch auch, beispielsweise nur jedem zweiten Verdickungsansatz ein Dämpfungselement zuzuordnen. Ober- bzw. unterseitig des Statorkerns ist eine Brücke angeordnet, wobei die Brücke über den Umfang verteilt, bevorzugt symmetrisch verteilt, Abschnitte aufweist, an welchen die Brücke mit einer Randkante des Statorkerns übereinstimmend verläuft. Diese weiter bevorzugt von der im Wesentlichen topfförmigen Brücke abragenden Abschnitte dienen weiter bevorzugt der Befestigung der Brücke an dem Stator, wozu in vorteilhafter Weise die, Statorbleche zusammenhaltende Verschraubung genutzt werden kann. Wie bereits erwähnt, werden bevorzugt vier umfangsmäßig gleichmäßig verteilte Verschraubungen vorgesehen, die in den Verdickungsbereichen des Stators angeordnet sind. Entsprechend weist die Brücke vier über den Umfang gleichmäßig verteilte Abschnitte auf. Die Brücke bzw. die beiden ober- und unterseitig des Statorkerns angeordneten Brücken dienen zugleich als Lagerung des in dem Statorkern frei drehbaren Rotors. Eine Zentrierung der Brücken ist dadurch erreicht, dass die von den Befestigungsschrauben durchsetzten Bohrungen im Stator und in den Abschnitten der Brücke gegenüber dem Schraubendurchmesser durchmesservergrößert sind und so in einem vorgegebenen Toleranzbereich eine Ausrichtung der Brücken vor einem Festziehen der Schrauben erreicht werden kann. So ist der Bohrungsdurchmesser gegenüber dem Schraubendurchmesser um 10 bis 15 %, bevorzugt etwa 12 % vergrößert. Um die erreichte Zentrierstellung der Brücke weiter zu fixieren, ist vorgesehen, dass die Brücke reibschlüssig mit dem Statorkern verbunden ist, wozu weiter bevorzugt dieser Reibschluss mittels einer speziellen Oberflächenbehandlung, beispielsweise durch Riffelplanierung, erreicht ist. Zufolge dieser erfindungsgemäßen zentriergenauen Festlegung der Brücken können Fertigungstoleranzen des Kugellagersitzes für den Rotor ausgeglichen werden. Diesbezüglich ist weiter vorgesehen, dass die Brücke einen mittigen axialen Zylinderabschnitt aufweist, der frei von einem Axialanschlag ein Kugellager aufnimmt. Letzteres wird bevorzugt in den axialen Zylinderabschnitt eingeklebt. Um bei der Verschraubung der Brücken mit dem Stator eine definierte Kraftübertragung über die umlaufende Auflagelinie der Brücke auf dem Stator zu gewährleisten, ist weiter vorgesehen, dass ein Brücken-Außenrand im Querschnitt in einem spitzen Winkel zu einer Horizontalen, das heißt zu einer senkrecht zur Rotordrehachse verlaufenden Ebene verläuft. Als insbesondere herstellungstechnisch vorteilhaft erweist sich eine Ausgestaltung, bei welcher beide Brücken, das heißt die oberseitig des Statorkerns anzuordnende Brücke und die unterseitig des Statorkerns anzuordnende Brücke im Wesentlichen identisch, formgleich ausgebildet sind.

Nachstehend ist die Erfindung anhand der beigefügten Zeichnungen, welche lediglich ein Ausführungsbeispiel darstellen, näher erläutert. Es zeigt:
- Fig. 1: einen erfindungsgemäßen Reluktanzmotor in perspektivischer Zu- sammenbaudarstellung;
- Fig. 2: den Reluktanzmotor in einer perspektivischen Explosionsdarstellung; .
- Fig. 3: den Stator in einer perspektivischen Einzeldarstellung mit einem sche- matisch dargestellten, einem Verdickungsansatz des Stators zuordbaren Dämpfungselement;

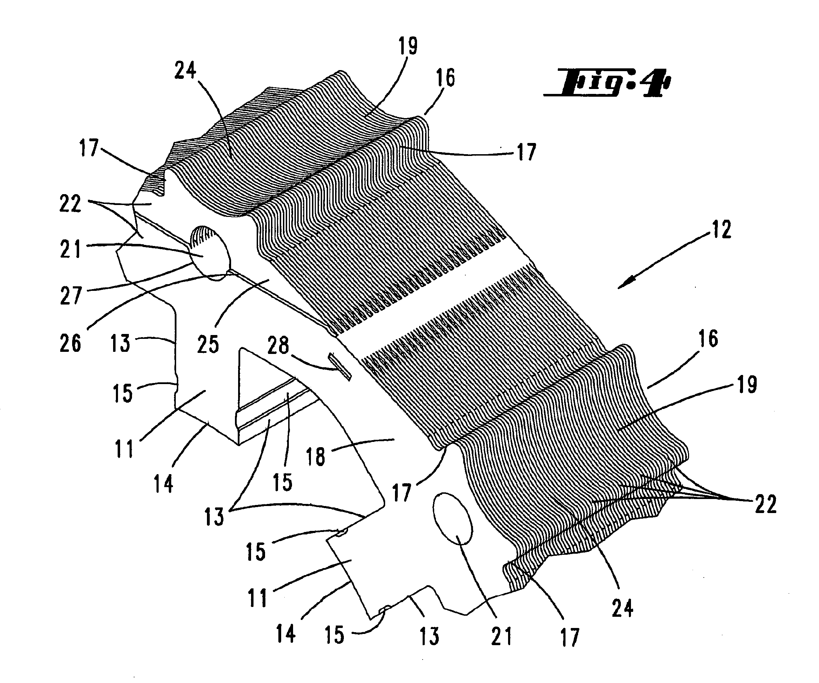

- Fig. 4: eine Herausvergrößerung des Bereichs IV in Fig. 3;
- Fig. 5: die Draufsicht auf ein Statorblech mit in strichpunktierter Linienart an- gedeuteter Außenkontur des Stators; ' .

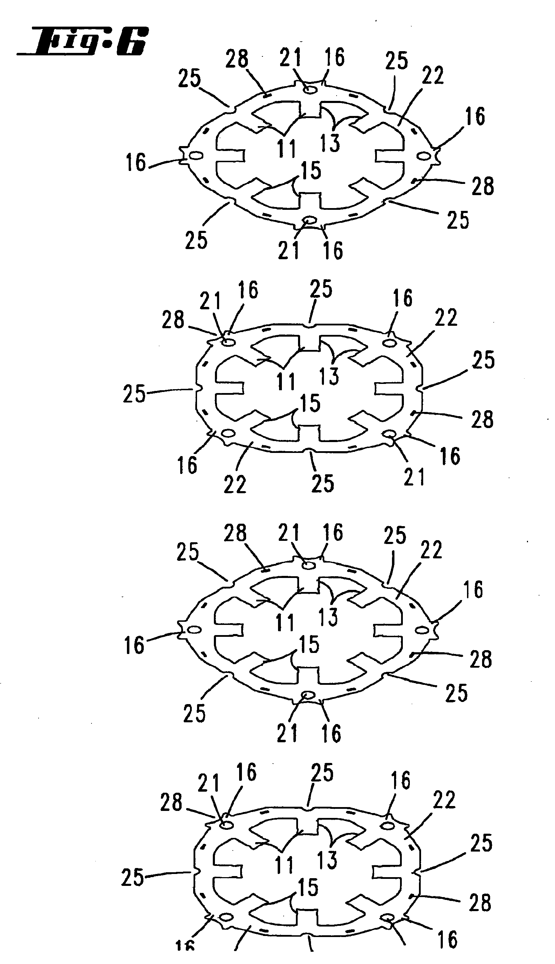

- Fig. 6: in perspektivischer Explosionsdarstellung die Übereinanderlage von vier gleich ausgebildeten, jedoch von Lage zu Lage in Umfangsrichtung versetzten Statorblechen;
- Fig. 7: die Draufsicht auf den durch Übereinanderanordnung der Statorbleche gebildeten Stator;
- Fig. 8: den Schnitt gemäß der Linie Viel - Viel in Fig. 7 mit zugeordneten Dämpfungselementen;
- Fig. 9: den stark vergrößerten Schnitt gemäß der Linie IX - IX in Fig. 7.

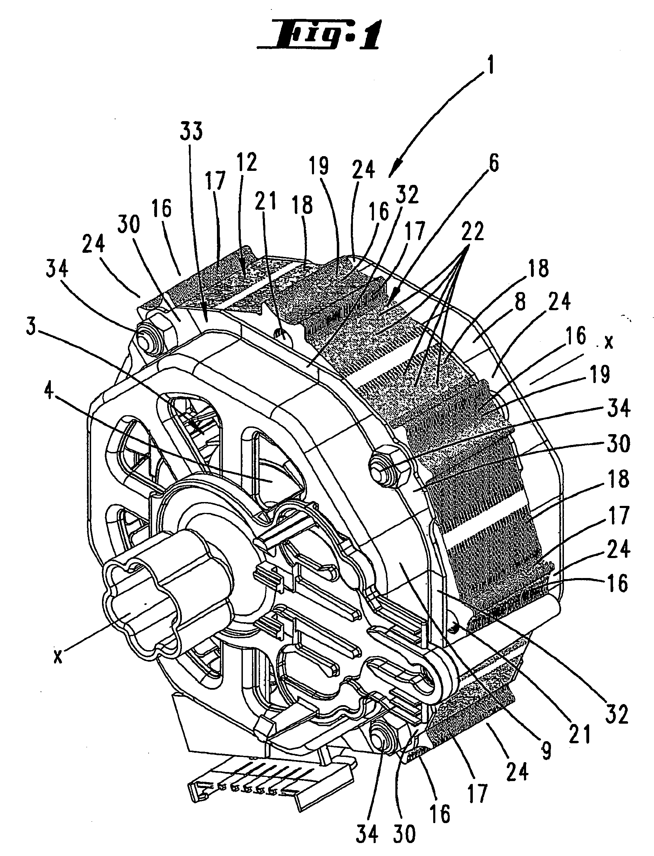

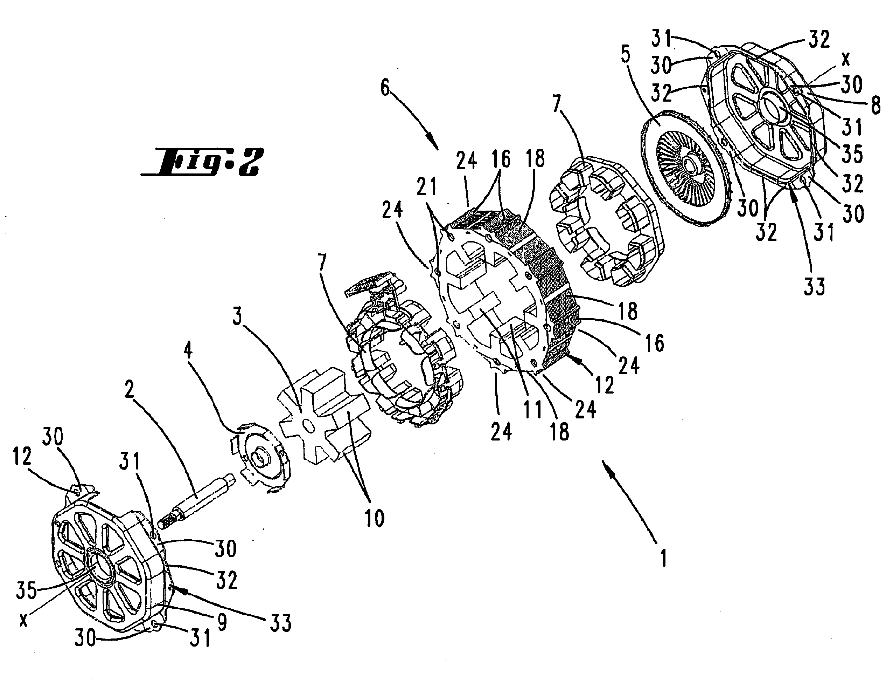

Dargestellt und beschrieben ist zunächst mit Bezug zu den Fig.1 und 2 ein Reluktanzmotor 1, welcher im Wesentlichen besteht aus einem auf einen Rotorachskörper 2 aufsteckbaren Rotor 3, einer gleichfalls auf den Rotorachskörper 2 aufsteckbaren und drehfest mit dem Rotor 3 verbindbaren Geberscheibe 4 sowie einem auf der der Geberscheibe 4 gegenüberliegenden Seite des Rotors 3 drehfest mit diesem anordbaren Lüfter 5, einem Stator 6 mit einem zweiteiligen Statorabdeckkörper 7 zur Aufnahme von nicht dargestellten Statorspulen und zwei beidseitig des Stators 6 an diesem befestigbare, die Enden des Rotorachskörpers 2 lagernden Brücken 8, 9.

Der dargestellte Reluktanzmotor 1 ist ein sogenannter 8/6 Reluktanzmotor und weist somit einen Rotor 3 mit sechs Rotorsegmenten 10 und einen Stator 6 mit acht, mit nicht näher dargestellten Statorspulen zu versehene Wickelkerne 11 auf.

Der Statorkern 12 des Stators ist im Wesentlichen ringförmig, im Grundriss mehreckig ausgebildet, so in dem dargestellten Ausführungsbeispiel im Wesentlichen in Form eines Achtecks. Jedem zwei benachbarte Eckbereiche verbindenden Kernabschnitt ist ein radial nach innen weisender Wickelkern 11 zugeordnet, welcher bezogen auf die Statorachse x in radialer Richtung parallele Flanken 13 aufweist. Der Abstand der Flanken 13 zueinander definiert die Breite b₁ des Wickelkerns, welche Breite b₁ in dem dargestellten Ausführungsbeispiel etwa 11 mm beträgt.

Die radial innere Stirnfläche 14 jedes Wickelkerns 11 ist kreisabschnittförmig mit einem sich auf die Statorachse x beziehenden Radius geformt.

Im Übergangsbereich von den Flanken 13 zur Stirnseite 14 sind parallel zur Statorachse verlaufende nutartige Vertiefungen 15 in den Flanken 13 vorgesehen.

In Radialrichtung zu den Wickelkernen 11 ist der Stator 6 verbreitert, wozu gegenüberliegend zu einem Wickelkern 11 ein sich nach radial außen vorstehender Verdickungsansatz 16 ausgebildet ist. Dieser weist in radialer Richtung parallele Flanken 17 auf, deren Abstand die Breite b₂ definieren. In dem dargestellten Ausführungsbeispiel entspricht die Breite b₂ etwa 16 mm, wobei eine zwischen den Flanken 17 gedachte Mittellinie in Verlängerung in Richtung auf die Statorachse x gleichfalls mittig zwischen den Flanken 13 des zugeordneten Wickelkerns 11 verläuft (Linie u).

Die in radialer Richtung gemessene Dicke d₂ des Statorkerns 12 im Bereich eines Verdickungsansatzes 16 beträgt in dem dargestellten Ausführungsbeispiel etwa 14 mm, wohingegen im Bereich einer zwei derartig radial verbreiterte Bereiche verbindenden Statorkernbrücke 18 eine radiale Dicke d₁ von 10 mm vorliegt. Hieraus ergibt sich ein radialer Vorstand des Verdickungsansatzes 16 von etwa 4 mm gegenüber der im Bereich der Statorkernbrücke 18 ausgebildeten Stator-Außenrandkante.

Wie weiter aus den Darstellungen zu erkennen, weist der Stator 6 acht über den Umfang gleichmäßig verteilt angeordnete. Wickelkerne 11 und dementsprechend auch acht gleichmäßig verteilte Verdickungsansätze 16 auf, demzufolge zwei in Umfangsrichtung benachbarte Verdickungsansätze 16 einen Winkel α von 45° einschließen.

Die freien Stirnseiten 19 der Verdickungsansätze 16 sind konkav geformt, wobei in dem dargestellten Ausführungsbeispiel ein Radius von 9 mm vorgesehen ist.

Sowohl die Übergänge von der Stirnseite 19 in die Flanken 17 als auch die Übergänge von den Flanken 17 in den Außenrand der benachbarten Statorkembrücken 18 sind verrundet bzw. ausgekehlt.

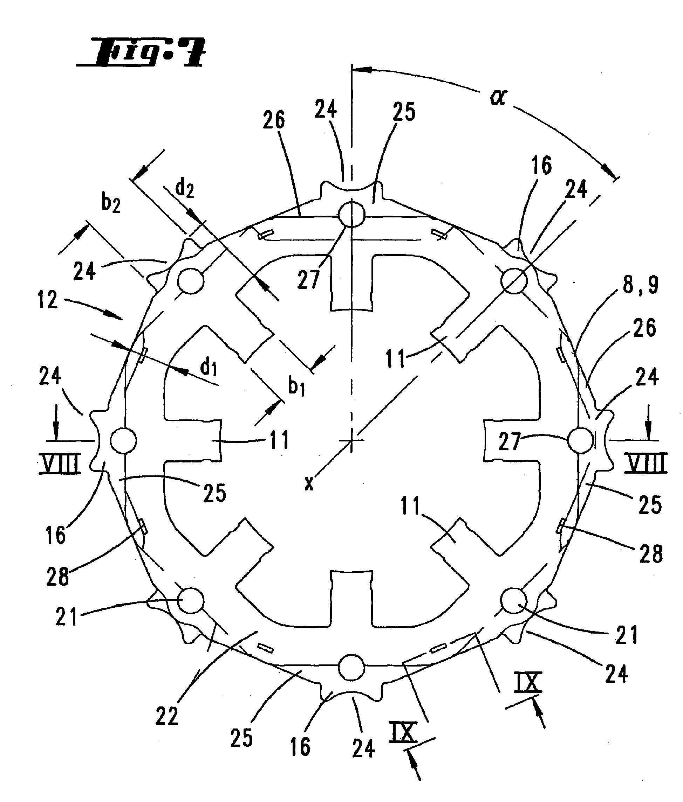

Mit Bezug auf die in Fig. 7 gezeigte Grundrissdarstellung des Stators 6 ist zu erkennen, dass der Außenrand 20 im Bereich der zwischen zwei Wickelkernen sich erstreckenden Statorkernbrücken 18 rechtwinklig zu einer gedachten, sich auf die Statorachse x beziehenden Radiuslinie verlaufen, wobei weiter eine mittig die Außenrandlinie einer Statorkernbrücke 18 schneidende Radiuslinie statorkerninnenwandig einen Eckbereich des Innen-Acht-Ecks des Stators 6 durchsetzt.

Jedem Verdickungsansatz 16 und somit jedem Wickelkern 11 zugeordnet ist in dem Stator 6 eine parallel zur Statorachse x ausgerichtete Durchgangsbohrung 21 vorgesehen, deren Achse auf der mittig den Wickelkern 11 und dem Verdickungsansatz 16 durchsetzenden Linie u ausgerichtet ist. Weiter ist die Durchgangsbohrung 21 fußseitig des Verdickungsansatzes 16 angeordnet. Der Durchmesser einer jeden Durchgangsbohrung 21 beträgt in dem dargestellten Ausführungsbeispiel ca. 6,5 mm. Entsprechend der Anzahl der Verdickungsansätze 16 bzw. der Wickelkerne 11 sind acht über den Umfang gleichmäßig verteilte Durchgangsbohrungen 21 vorgesehen.

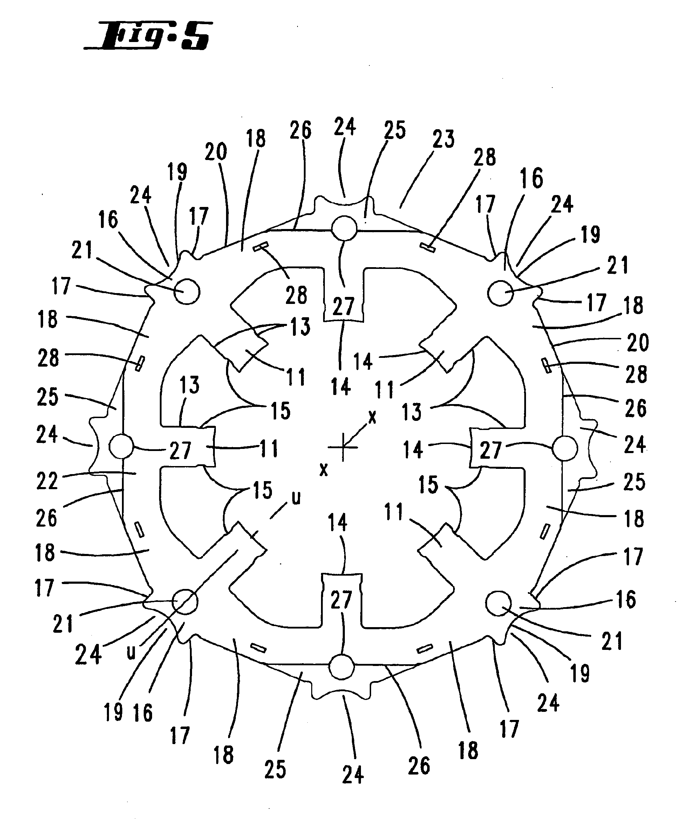

Der Stator 6 ist aus übereinandergelegten, untereinander gleich ausgebildeten Statorblechen 22 zusammengesetzt. Ein solches Statorblech 22 ist in Fig. 5 in einer Einzeldarstellung gezeigt. Dieses Statorblech 22 ist aus einem Blech gestanzt und weist bevorzugt eine Dicke von ca. 0,5 mm auf.

Wie insbesondere aus der Einzeldarstellung in Fig. 5 zu erkennen, entspricht die Außenkontur eines Statorbleches 22 nicht der Fig. 5 in strichpunktierter Linienart wiedergegebenen Außenkontur 23 des aus den übereinander anzuordnenden Statorblechen 22 gebildeten Stators 6. Die nachfolgend weiter als Ecken 24 bezeichneten Verdickungsansätze 16 sind in einem Statorblech 22 nicht alle ausgebildet. Vielmehr weist das Statorblech 22 umfangsmäßig abwechselnd eine ausgefüllte Ecke 24 zur Bildung eines Verdickungsansatzes 16 und an der in Umfangsrichtung folgenden, beim fertigen Stator 6 gleichfalls einen Verdickungsansatz 16 ausformenden Ecke 24 einen Fehlbereich 25 auf. Demnach ist in dieser weiteren Ecke 24 der Verdickungsansatz 16 unberücksichtigt. Vielmehr ist in diesem Bereich eine senkrecht zur mittig der Flanken 13 des zugeordneten Wickelkerns 11 verlaufenden Linie u ausgerichtete Eckbereichs-Randkante 26 vorgesehen, welche beiderends in die Außenränder 20 der benachbarten Statorkernbrücken 18 übergehen. Im Schnittbereich der Mittellinie u und der Eckbereich-Außenrandkante 26 ist ein halbkreisförmiger Ausbruch 27, angepasst und ausgerichtet an die bereits erwähnten Durchgangsbohrungen 21 ausgebildet.

Entsprechend der zuvor beschriebenen Anordnungen liegen bezogen auf ein Statorblech 22 vier umfangsmäßig gleichmäßig verteilt angeordnete Ecken 24 mit Verdickungsansätzen 16 vor, zwischen welchen Verdickungsansatz-Ecken Ecken 24 mit Fehlbereichen 25 platziert sind.

Um die gewünschte Grundfläche des Statorkerns 12 - wie in Fig. 7 dargestellt - zu erhalten, werden die Statorbleche von Lage zu Lage in Umfangsrichtung um eine Ecke 24 versetzt angeordnet, so dass einem Fehlbereich 25 eines unteren Statorblechs 22 eine Ecke 24 mit einem Verdickungsansatz 16 zugeordnet und entsprechend einer Ecke 24 eines Verdickungsansatzes 16 des unteren Statorbleches 22 ein Fehlbereich 25 des oberen Statorblechs 22 zugeordnet ist (vgl. Fig. 7). Zufolge dieser Anordnung ist bei konsequenter zyklischen Lagevertauschung der übereinander angeordneten Statorbleche 22 ein umfangsmäßig und in der Grundfläche gleichmäßiger Statorkern 12 geschaffen.

Durch die versetzte Anordnung der übereinanderliegenden Statorbleche 22 stellen sich insbesondere im Bereich der Verdickungsansätze 16 aber auch in benachbarten Bereichen der Statorkembrücken 18 kühlrippenartige Blechzungenabschnitte ein, welche von einem Statorblech 22 gebildet sind und ober- sowie unterseitig durch die zugeordneten Fehlbereiche 25 freigestellt sind. Zufolge dieser Ausgestaltung ist bei Erhöhung der Stabilität des Statorkerns 12 zugleich eine verbesserte Kühlung desselben erreicht.

Die übereinander anzuordnenden Statorbleche 22 weisen zur Verklebung untereinander einseitig eine Backlackschicht auf.

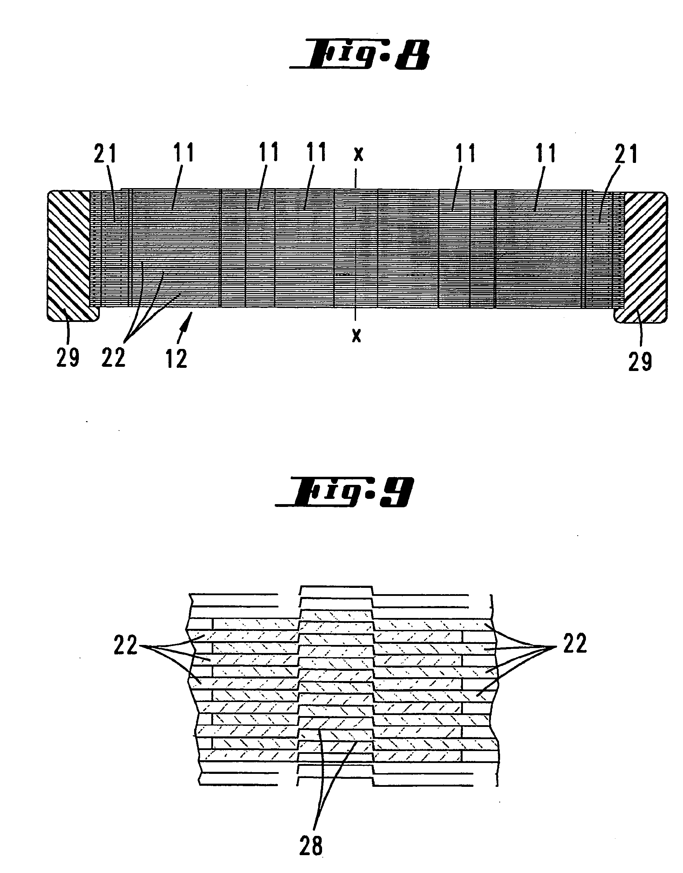

Zur drehfesten Anordnung der Statorbleche 22 zueinander und darüber hinaus auch zur eindeutigen Zuordnung zueinander sind die Statorbleche.22 stanzpaketiert, wozu im Bereich der Statorkernbrücken 18 jeweils eine Einsenkung 28 vorgenommen ist. Die hierdurch auf der gegenüberliegenden Seite des Statorblechs 22 geschaffene Wulst liegt in der Einsenkung 28 des darunter befindlichen Statorblechs 22 ein (vgl. Fig. 9).

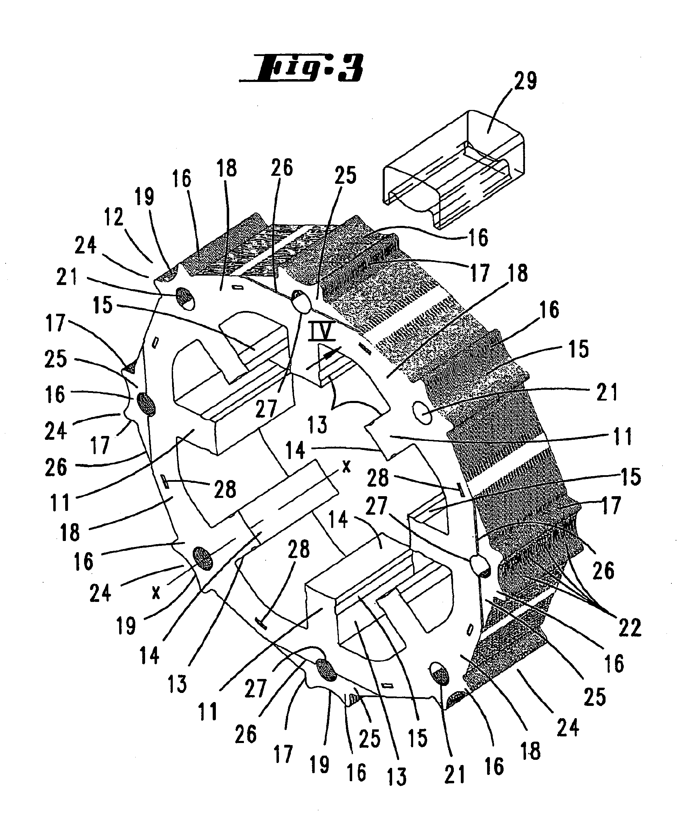

Die ausgeformten Verdickungsansätze 16 dienen des Weiteren zur Aufnahme von aus einem Weichkunststoff bestehenden Dämpfungselementen 29. Ein solches Dämpfungselement 29 ist in der Fig. 3 schematisch dargestellt. Dieses ist schuhartig ausgebildet mit einem Öffnungsquerschnitt, welchem der Querschnittskontur eines Verdickungsansatzes 16 in etwa entspricht. Das Dämpfungselement 29 wird einseitig, parallel zur Statorachse x ausgerichtet von der Ober- oder Unterseite des Statorkerns 12 auf den Verdickungsansatz 16 aufgeschoben. Bevorzugt werden alle acht Verdickungsansätze 16 mit einem solchen Dämpfungselement 29 versehen, über welche eine Lagerung des Stators 6 in einer nicht dargestellten Motoraufnahme erreicht ist.

Die ober- und unterseitig des Statorkerns angeordneten Brücken 8 und 9 sind im Wesentlichen topfartig mit einem der Innenrandkontur des Statorkerns 12 angepassten acht-eckigen Grundriss, wobei fußseitig der Topfwandung radial nach außen abragende, über den Umfang symmetrisch verteilte Abschnitte 30 angeformt sind. Diese laschenartigen Abschnitte 30 dienen zur Festlegung der Brücke 8 bzw. 9 an dem Statorkern 12.

Des Weiteren sind die Abschnitte 30 grundrissmäßig so ausgebildet, dass diese mit zugeordneten Randkanten des Statorkerns 12 zumindest partiell übereinstimmend verlaufen, so weiter insbesondere mit der Randkante des obersten, der Brücke 8 bzw. 9 direkt zugeordneten Statorblechs 22.

Weiter weisen die Abschnitte 30 eine zentrale Bohrung 31 auf, welche durchmesserangepasst sind an die Durchgangsbohrungen 21 des Statorkerns 12.

Zur reibschlüssigen Halterung der Brücke 8 bzw. 9 auf dem Statorkern 12 ist die Unterseite der Abschnitte 30 und weiter auch die Unterseite eines zwischen den Abschnitten 30 verlaufenden Kragens 32 riffelplaniert.

Zudem ist der durch die Abschnitte 30 und die zwischen diesen angeordneten Kragen 32 gebildete Brücken-Außenrand 33 im Querschnitt gepfeilt, so dass dieser Außenrand 33 im Querschnitt in einem spitzen Winkel zu der zugeordneten Oberfläche des Statorkerns 12 verläuft. Der Brücken-Außenrand 33 schert demnach nach radial außen von der zugeordneten Oberfläche des Statorkerns 12 ab.

Zur Festlegung der Brücken 8 und 9 sowie zur kraftschlüssigen Verbindung der Statorbleche 22 untereinander werden durch die vier gleichmäßig über den Umfang verteilten Abschnitte 30 der Brücken 8 und 9 sowie durch die zugeordneten vier Durchgangsbohrungen 21 des Statorkerns 12 Spannschrauben 34 geführt, deren Durchmesser geringer bemessen ist als der Durchmesser der Durchgangsbohrungen 21 bzw. der Bohrungen 31 in den Abschnitten 30. So ist durch das gegebene Spiel eine genaue Zentrierung der Brücken 8 und 9 zum Statorkern 12 ermöglicht.

Durch die leicht gepfeilt nach oben verlaufenden Abschnitte 30 der Brücken 8 und 9 ist im Zuge der Verspannung mittels der Spannschrauben 34 die Kraftübertragung über die innere Fußlinie der topfartigen Brücke 8 bzw. 9 erreicht.

Zudem weist jede Brücke 8, 9 einen mittigen axialen Zylinderabschnitt 35 auf, welcher frei von einem Axialanschlag ein Kugellager zur Lagerung des Rotorachskörpers 2 aufnimmt. Das nicht näher dargestellte Kugellager ist in den Zylinderabschnitt 35 eingeklebt.

## Patentansprüche

1. Reluktanzmotor (1) mit einem Rotor (3) und einem Stator (6), wobei ein Statorkern (12) Wickelkerne (11) aufweist und aus übereinandergelegten Statorblechen (22) zusammengesetzt ist, ein Statorblech (22) weniger als die Grundfläche des Statorkerns (12) abdeckt und ein insofern gebildeter Fehlbereich (25) dem Statorkern-Außenrand zugeordnet ist, wobei weiter die übereinander angeordneten Statorbleche (22) von Lage zu Lage zyklisch vertauscht sind, zur Ausbildung von kühlrippenartigen Blechzungenabschnitten, wobei darüber hinaus ein in der Grundfläche mehreckiges Statorblech vorgesehen ist, **dadurch gekennzeichnet, dass** umfangsmäßig abwechselnd das Statorblech 22 eine ausgefüllte Ecke zur Bildung eines gegenüberliegend zu einem Wickelkern angeordneten, in radialer Richtung parallel zueinander verlaufende Flanken aufweisenden Verdickungsansatzes (16) aufweist und an der in Umfangsrichtung folgenden, beim fertigen Stator (6) gleichfalls einen Verdickungsansatz (16) ausformenden Ecke (24) einen Fehlbereich (25) aufweist, wobei darüber hinaus die zwischen den Flanken des Verdickungsansatzes gegebene Breite etwa dem 1,2 bis 1,7-fachen der Breite des zugeordneten Wickelkerns entspricht.

2. Reluktanzmotor nach Anspruch 1, **dadurch gekennzeichnet, dass** an den Flanken (13) der Wickelkerne (11) nutartige Vertiefungen ausgebildet sind.

3. Reluktanzmotor nach einem der vorhergehenden Ansprüche, **dadurch gekennzeichnet, dass** die Übergänge von den Flanken (17) eines Verdickungsansatzes in den Außenrand der benachbarten Statorbleche ausgekehlt verlaufen.

4. Reluktanzinotor nach einem der Ansprüche 1 bis 3, **dadurch gekennzeichnet, dass** die den Statorkern (12) bildenden Statorbleche (22) untereinander gleich ausgebildet sind.

5. Reluktanzmotor nach einem der Ansprüche 1 bis 4, **dadurch gekennzeichnet, dass** in Höhenrichtung des Statorkerns (12) jeweils an einer Ecke (24) die Statorbleche (22) abwechselnd die Ecke (24) ausbildend oder einen Fehlbereich (25) zuordnend angeordnet sind.

6. Reluktanzmotor nach einem der vorhergehenden Ansprüche, **dadurch gekennzeichnet, dass** die untereinander gleichen Statorbleche (22) zufolge der zyklischen Vertauschung in Umfangsrichtung jeweils um eine Ecke (24) versetzt sind.

7. Reluktanzmotor (1) mit einem Rotor (3) und einem Stator (6), wobei ein Statorkern (12) Wickelkerne (11) aufweist und gegenüberliegend zu einem Wickelkern (11) ein nach radial außen vorstehender Verdickungsansatz (16) ausgebildet ist, **dadurch gekennzeichnet, dass** der Verdickungsari.satz (16) in radialer Richtung parallele Flanken aufweist und dass der Verdickungsansatz (16) an seiner freien Stirnkante (19) konkav geformt ist.

8. Reluktanzmotor nach Anspruch 7, **dadurch gekennzeichnet, dass** der nach radial außen vorstehende Verdickungsansatz (16) Träger eines Dämpfungselements (29) ist.

9. Reluktanzmotor nach einem der Ansprüche 7oder 8, **dadurch gekennzeichnet, dass** der Stator (6) mittels Dämpfungselemente (29) in einer Motoraufnahme gelagert ist.

10. Reluktanzmotor nach einem der Ansprüche 8 oder 9, **dadurch gekennzeichnet, dass** ein Dämpfungselement (29) aus einem Weichkunststoff besteht.

11. Reluktanzmotor nach Anspruch 10, **dadurch gekennzeichnet, dass** ein Dämpfungselement (29) schuhartig ausgebildet ist.

## Claims

1. Reluctance motor (1) with a rotor (3) and a stator (6), a stator core (12) having winding cores (11) and being made up of superposed stator laminations (22), a stator lamination (22) covering less than the base area of the stator core (12) and a missing region (25) that is formed to this extent being associated with the outer edge of the stator core, the stator laminations (22) which are disposed one over the other being recurrently interchanged from layer to layer in order to form lamination tongue portions resembling cooling fins, moreover a stator lamination being provided that is polygonal in base area, **characterized in that**, alternately in the circumferential direction, the stator lamination (22) has a filled corner in order to form a thickening extension (16) which is disposed opposite a winding core and has flanks that extend parallel to one another in the radial direction, and has a missing region (25) at the corner (24) which follows in the circumferential direction and likewise forms, in the assembled stator (6), a thickening extension (16), moreover the width defined between the flanks of the thickening extension corresponding to approximately 1.2 to 1.7 times the width of the associated winding core.

2. Reluctance motor according to Claim 1, **characterized in that** groove-like depressions are formed on the flanks (13) of the winding cores (11).

3. Reluctance motor according to either of the preceding claims, **characterized in that** the transitions from the flanks (17) of a thickening extension into the outer edge of the neighbouring stator lamination are chamfered.

4. Reluctance motor according to any of Claims 1 to 3, **characterized in that** the stator laminations (22) forming the stator core (12) are formed identically to one another.

5. Reluctance motor according to any of Claims 1 to 4, **characterized in that**, in the direction of the height of the stator core (12), the stator laminations (22) are associatingly disposed in each case at a corner (24) in such a way that they alternately form the corner (24) or provide a missing region (25).

6. Reluctance motor according to any of the preceding claims, **characterized in that** the stator laminations (22), which are identical to one another, are offset in the circumferential direction in each case by one corner (24) as a result of the recurrent interchange.

7. Reluctance motor (1) with a rotor (3) and a stator (6), a stator core (12) having winding cores (11) and a radially outwardly-protruding thickening extension (16) being formed opposite a winding core (11), **characterized in that** the thickening extension (16) has flanks that are parallel in the radial direction and **in that** the thickening extension (16) is concavely shaped at its free end edge (19).

8. Reluctance motor according to Claim 7, **characterized in that** the radially outwardly-protruding thickening extension (16) is carrier for a damping element (29).

9. Reluctance motor according to either of Claims 7 and 8, **characterized in that** the stator (6) is mounted in a motor mounting by means of damping elements (29).

10. Reluctance motor according to any of Claims 8 or 9, **characterized in that** a damping element (29) consists of a soft plastic.

11. Reluctance motor according to Claim 10, **characterized in that** a damping element (29) is formed in the manner of a shoe.

## Revendications

1. Moteur à réluctance (1) avec un rotor (3) et un stator (6), un noyau de stator (12) présentant des noyaux d'enroulement (11) et étant composé de tôles de stator (22) placées les une au-dessus des autres, une tôle de stator (22) couvrant moins que la surface de base du noyau de stator (12), et une zone d'erreur (25), formée dans cette mesure, étant associée au bord extérieur de noyau de stator, où en outre les tôles de stator (22) disposées les unes au dessus des autres sont permutées cycliquement d'une couche à une autre, pour former des tronçons de languette de tôle du type ailette de refroidissement, où de plus une tôle de stator à surface de base polygonale est prévue, **caractérisé en ce que**, en alternance en périphérie, la tôle de stator (22) présente un angle rempli, pour former un appendice d'épaississement (16), disposé en opposition à un noyau d'enroulement, présentant des flancs s'étendant parallèlement les uns aux autres en direction radiale et présente, au niveau de l'angle (24), subséquent en direction périphérique, formant également un appendice d'épaississement (16) lorsque la fabrication du stator (6) est terminée, une zone d'erreur (25), sachant que, de plus, la largeur définie entre les flancs de l'appendice d'épaississement correspond à peu près à 1,2 à 1,7 fois la largeur du noyau d'enroulement associé.

2. Moteur à réluctance selon la revendication 1, **caractérisé en ce que** des cavités du type rainure sont réalisées sur les flancs (13) des noyaux d'enroulement (11).

3. Moteur à réluctance selon l'une des revendications précédentes, **caractérisé en ce que** les transitions par rapport aux flancs (17) d'un appendice d'épaississement s'étendent en cannelure dans le bord extérieur des tôles de stator voisines.

4. Moteur à réluctance selon l'une des revendications 1 à 3, **caractérisé en ce que** les tôles de stator (22) formant le noyau de stator (12) sont identiques entre elles.

5. Moteur à réluctance selon l'une des revendications 1 à 4, **caractérisé en ce que**, dans la direction de la hauteur du noyau de stator (12), chaque fois à un angle (24), les tôles de stator (22) sont disposées en alternance en formant l'angle (24) ou en association avec une zone d'erreur (25).

6. Moteur à réluctance selon l'une des revendications précédentes, **caractérisé en ce que** les tôles de stator (22) identiques entre elles sont chacune décalées en direction périphérique de la valeur d'un angle (24), par suite de la permutation cyclique.

7. Moteur à réluctance (1) avec un rotor (3) et un stator (6), un noyau de stator (12) présentant des noyaux d'enroulement (11) et un appendice d'épaississement (16), faisant saillie radialement vers l'extérieur, étant réalisé en opposition à un noyau d'enroulement (11), **caractérisé en ce que** l'appendice d'épaississement (16) présente des flancs parallèles en direction radiale et **en ce que** l'appendice d'épaississement (16) est de forme concave sur son arête frontale (19) libre.

8. Moteur à réluctance selon la revendication 7, **caractérisé en ce que** l'appendice d'épaississement (16), faisant saillie radialement vers l'extérieur, est le support d'un élément d'amortissement (29).

9. Moteur à réluctance selon l'une des revendications 7 ou 8, **caractérisé en ce que** le stator (6) est monté dans un logement de moteur, au moyen d'éléments d'amortissement (29).

10. Moteur à réluctance selon l'une des revendications 8 ou 9, **caractérisé en ce qu'**un élément d'amortissement (29) est en matière synthétique souple.

11. Moteur à réluctance selon la revendication 10, **caractérisé en ce qu'**un élément d'amortissement (29) est réalisé à la manière d'un patin.
